(19) Europäisches Patentamt
European Patent Office
Office européen des brevets

(11) EP 3 076 355 A1

(12) EUROPEAN PATENT APPLICATION

(43) Date of publication:
05.10.2016 Bulletin 2016/40

(51) Int Cl.:
*G06Q 30/02* (2012.01)

(21) Application number: 15305485.3

(22) Date of filing: 01.04.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: ALCATEL LUCENT
92100 Boulogne-Billancourt (FR)

(72) Inventors:
• MASHHADI, Afra
  Dublin, 15 (IE)
• VANDERHULST, Geert
  Antwerp 2018 (BE)
• KAWSAR, Fahim
  Antwerp 2018 (BE)

(74) Representative: Bryers LLP
7 Gay Street
Bath, Bath and North East Somerset BA1 2PH
(GB)

(54) **METHOD FOR GENERATING A REPUTATION MEASURE, AN ACCESS POINT, USER EQUIPMENT AND A COMPUTER PROGRAM PRODUCT**

(57) A method for generating a reputation measure of a location using location visit patterns, comprising receiving multiple probe request messages at a wireless access point at or in the vicinity of the location from respective ones of multiple user equipment devices, generating, for respective ones of the devices, a preferred network list, PNL, including one or more Service Set Identifiers, SSIDs, derived from probe requests received at the access point within a pre-defined period of time, and generating a familiarity metric for a device representing a measure of the similarity between the generated PNL of the device and multiple historic PNLs stored at or for the access point by comparing the generated PNL with the multiple historic PNLs.

Figure 1

**Description**

TECHNICAL FIELD

Aspects relate, in general, to a method for generating a reputation measure, an access point, user equipment and a computer program product.

BACKGROUND

As cities grow and expand, their number of venues, Points of Interests (Pols) and services that are available to citizens also increases. Reviews, such as online reviews, are used on a large scale to assess the quality and reputation of urban venues, like hotels, restaurants, museums, and so on. However, contributing reviews requires manual effort, and is generally undertaken by only a small fraction of a venue's visitors.

Although sources of such manually provided reviews and ratings provide valuable and often very detailed information regarding places and venues, there are various limitations and disadvantages. First, the reviews and scores of these systems are reflective of the opinion of only those who have contributed their feedback, as opposed to the broader population sample of every individual who has visited the location. Secondly, in gathering feedback, the social relationship between visitors is not taken into account. That is, a user consuming a review or rating is not aware whether the review or score of a location has been contributed by social relations (such as friends or family for example) or people similar to her. Also, by design, the usage of online reviews and reputation scores typically required the user to pre-plan and seek this information in advance to visiting a place, taking away the spontaneity of discovering new places.

SUMMARY

According to an example, there is provided a method for generating a reputation measure of a location using location visit patterns, comprising receiving multiple probe request messages at a wireless access point at or in the vicinity of the location from respective ones of multiple user equipment devices, generating, for respective ones of the devices, a preferred network list, PNL, including one or more Service Set Identifiers, SSIDs, derived from probe requests received at the access point within a pre-defined period of time, and generating a familiarity metric for a device representing a measure of the similarity between the generated PNL of the device and multiple historic PNLs stored at or for the access point by comparing the generated PNL with the multiple historic PNLs. A PNL for a device can be generated by aggregating probe requests captured at the access point within the pre-defined time period based on a source Media Access Control, MAC, address. The method can further include providing a weighting factor for respective ones of the SSID entries of the generated PNL representing a measure of the recurrence and/or uniqueness of the SSID of the generated PNL. A component of the weighting factor representing uniqueness can be calculated using a term frequency-inverse document frequency of each SSID entry in the generated PNL over all SSID entries in the multiple historic PNLs stored at or for the access point. A component of the weighting factor representing recurrence can be a measure of the number of times a device has connected to an access point that serves the network identified by an SSID. The method can further include generating a spatial score distribution representing a variation in the familiarity metric of the generated PNL for the device compared to the multiple historic PNLs, and calculating a shape parameter of the distribution. The shape parameter can represent a measure of the number of users who have connected to the access point at or in the vicinity of the location as well as other access points from the set of SSIDs of the generated PNL. The method can further include transmitting the shape parameter to the device using a probe response message of the access point directed to the device. The value of the shape parameter can be used by the device in order to recommend or execute services or access for the user at the location.

According to an example, there is provided a access point at or in the vicinity of a location, the access point operable to receive multiple probe request messages from respective ones of multiple user equipment devices in the vicinity of the location, generate, for respective ones of the devices, a preferred network list, PNL, including one or more Service Set Identifiers, SSIDs, using probe requests received within a pre-defined period of time, and generate a familiarity metric for a device representing a measure of the similarity between the generated PNL of the device and multiple historic PNLs stored at or for the access point by comparing the generated PNL with the multiple historic PNLs. The access point can generate a PNL for a device by aggregating captured or received probe requests captured according to a source Media Access Control, MAC, address. The access point can generate a spatial score distribution representing a variation in the familiarity metric of the generated PNL for the device compared the multiple historic PNLs, and calculate a shape parameter of the distribution. The access point can transmit the shape parameter to the device using a probe response message directed to the device.

According to an example, there is provided a user equipment device operable to receive a familiarity metric or shape parameter of a spatial score distribution from an access point, the device being operable to use the familiarity metric or shape parameter of the spatial score distribution to recommend or execute services or access for a user of the device at or in the vicinity of a location in which an access point that transmitted a probe response containing the familiarity metric or shape parameter of spatial score distribution is located.

According to an example, there is provided a computer program product, comprising a computer usable medium having computer readable program code embodied therein, said computer readable program code adapted to be executed to implement a method for generating a reputation measure of a location using location visit patterns as provided herein.

BRIEF DESCRIPTION OF THE DRAWINGS

Embodiments will now be described, by way of example only, with reference to the accompanying drawings, in which:

Figure 1 is a schematic representation of a directed probe request that is looking for a specific network called "Hilton NY" according to an example;

Figure 2 is a schematic representation of a system according to an example;

Figure 3 is a schematic representation of two spatial score distributions according to an example, for public versus private locations;

Figure 4 is a schematic representation of variations of the spatial score (long tail) distribution for three cases according to an example;

Figure 5 is a schematic representation of a system according to an example;

Figure 6 is a schematic representation of a system according to an example; and

Figure 7 is a schematic representation of the pairwise scores according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

According to an example, an offline spatial scoring mechanism, where information from visitors of a location or venue is anonymously captured and used to derive a spatial score relating to the location. The spatial score or familiarity metric is a quantification of the reputation of the location or venue based on physical visit patterns of similar and socially intimate users. A framework which uses non-obtrusive radio signals originating from user equipment (UE) devices, such as mobile telephones for example, of those who have visited a location in the past is provided. There is no need for any application or direct participation by users.

In an example, the radio signals used to generate a familiarity metric are WiFi probe requests transmitted by a device, which contain information relating to previously connected Access Points (APs) for the device and which can be aggregated and used to generate a Preferred Network List (PNL) for a user. Given that it is generally accepted that similar people enjoy similar activities (typically referred to as homophily), there are therefore more likely to be commonalities between the APs in the in PNLs of such people. For example, family members and partners are likely to have very similar PNLs, whereas work colleagues for example may exhibit less commonality in their respective previously connected APs (i.e., PNLs). However, the homophily is not limited only to the friendship and social relationships that are known to us face-to-face but can also include so-called familiar strangers. That is, those who may be regularly observed in different urban spaces inhabited by a particular user even though they are not directly interacted with or known to one another.

In an example, the spatial score can be a familiarity metric for a device representing a measure of the similarity between the generated PNL of the device and multiple historic PNLs stored at the access point, and can be calculated by comparing the generated PNL with the multiple historic PNLs so as to determine similarities therebetween.

According to an example, using captured PNLs, a spatial score can therefore be generated to provide a personalised similarity score for a location/venue between the user in question and all those who have visited the PoI in the past. That is, input from multiple users who visited the location whilst carrying a WiFi enabled device is used to derive a spatial score, thus taking into account a much larger potential population sample than online contributors. In an example, social relations of those who previously visited the place can also be discovered, enabling calculation of a spatial score in a personalised way. A spatial score can be communicated or transmitted to the user without the need for the user's device to be connected to the Internet at any point as will be described in more detail below.

In general, apart from data packets, mobile devices (UEs) exchange overhead messages with APs to manage wireless connections. Control Frames, for example, regulate access to an AP and make sure that two devices do not transmit packets at the same time. In addition, devices and APs exchange Management Frames that are used for authentication and association with a wireless network. A particular type of management frame, a Probe Request, is used by devices to actively discover available APs. If a probe request is populated with a Service Set Identifier (SSID) field, i.e., the name of the network the AP serves, then it is directed to a particular WiFi network. Otherwise, it is regarded as a broadcast probe request looking for any available network.

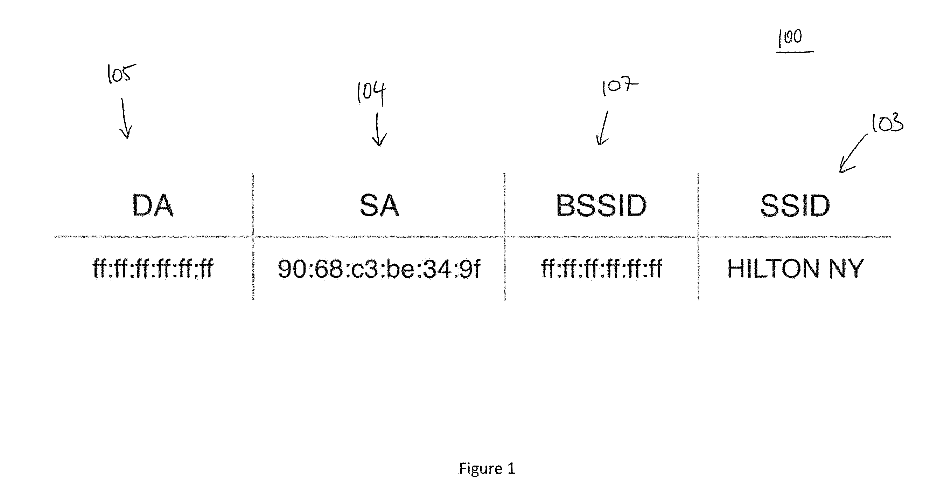

Figure 1 is a schematic representation of a directed probe request that is looking for a specific network called "Hilton NY" according to an example. That is, as shown in figure I, the (partial) request 100 includes SSID information 103 that identifies the name of a network served by an AP. The Probe Request 100 originates from a device with MAC address 104 "90:68:c3:be:34:9f'. The destination address 105 and the Basic Service Set ID 107 (BSSID, i.e., the MAC address of the AP) is set to a broadcast address (i.e., "ff:ff:ff:ff:ff:ff") for example in the case of a broadcast probe request as depicted in figure 1.

A UE transmits or broadcasts probe requests for every network it was connected to in the past with the corresponding SSID at vendor-specific time intervals, depending on the power state of the device and the connection state of the WiFi chip of the device. For example, a broadcast may occur every 15-60s for example. This list of networks (SSIDs) is denoted as the user's Preferred Network List (PNL). If an AP receives a probe request that is either broadcasted or contains its SSID, it replies with a Probe Response frame to inform the device of its proximity.

If the SSID of the AP is in the PNL of the device, the device and the AP can exchange the authentication and association frames to connect the device to the AP. Unlike a probe request, a probe response is always directed to a specific device. In a probe response, the source address and BSSID are set to the MAC address of the AP whereas the destination address corresponds to the MAC address of the device from which the probe request was received.

Since probe requests are not encrypted, they can be intercepted even if they are directed to a particular SSID. According to an example, probe requests originating from user devices (as a proxy of visitors of a place) are used to reconstruct PNLs from them (as a proxy of a visitor's familiar places) allowing homophily detection. That is, a familiarity score is generated from a generated PNL for a UE by comparing it with previously captured PNLs at an AP at the location in question. The result can be communicated back to the user in a probe response. Since this response is directed to a specific device, personalised information can be added enabling the device and applications executing on the device to use or leverage the information.

For example, 'beacon stuffing' can be used, in which extra information is encapsulated in WiFi management frames such that no active WiFi connection needs to be established with the AP (for which a user might not have proper credentials). For instance, a device can ping an AP with a directed probe request which is replied to by the AP with a directed probe response in which a spatial score can be embedded in (e.g., in vendor-specific fields that are reserved in WiFi management frames for example). At the device end, the score can be extracted from a received probe response and delegated to a notification service (as part of the mobile OS) for example to which local applications can subscribe and hence leverage the spatial scores as location-based context information. In an example, a familiarity metric can be a parameter relating to a distribution of scores relating to a comparison between the generated PNL from a user device and PNLs stored at an AP of the location in question from previous visits, either from the user himself or other users. A threshold for the parameter can be used to provide an easily consumable indication for the user in question of the familiarity of the location.

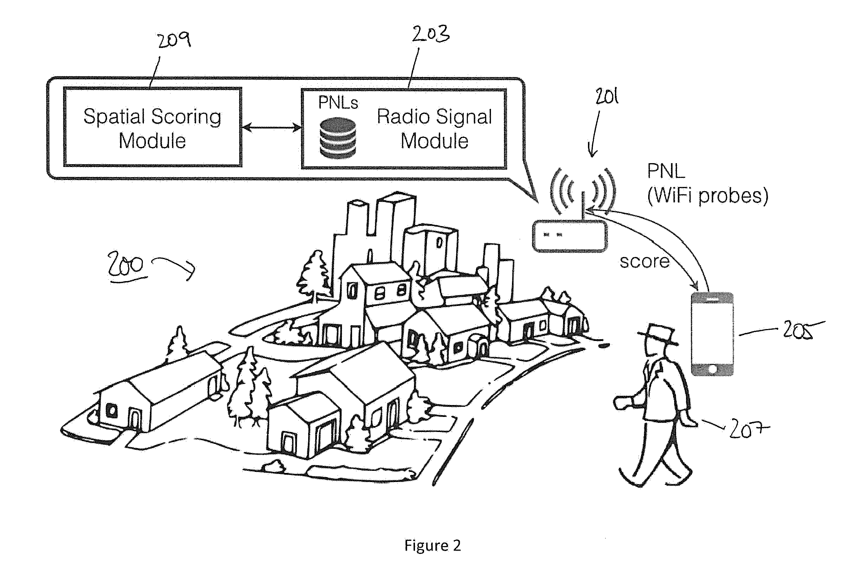

Figure 2 is a schematic representation of a system according to an example. At a location 200, which may be a venue or point of interest for example, an AP 201 is provided that enables devices in the vicinity of the AP 201, that is devices that are in range of the AP 201, to connect in order to use a network provided by the AP. For example, the AP can provide a WiFi network. The AP 201 includes a module 203 for capturing and storing PNLs from WiFi-enabled user devices, such as device 205 for example that belongs to a user 207, and a module 209 that computes personalised spatial scores based on these PNLs.

The existing wireless networking infrastructure at a location is used, save for the modules 203, 209, which can be provided as part of the firmware of the AP 201 or in the form of separate devices that are linked to AP 201 and which may be added/removed at will. In the example of figure 2, the location 200 has a single AP 201. However, it will be appreciated that many more APs may be provided at a location, and the system as described herein can scale up to places with multiple APs by, for example, moving shared storage facilities and a spatial scoring module to a remote location. For example, modules 203, 209 can be implemented as a cloud-based service.

According to an example, the WiFi interface of the AP 201 is used to listen to probe requests directed to any AP on a fixed channel. To obtain the PNL of a device 205, captured probe requests are aggregated based on their source MAC address (which identifies a single device) over a pre-defined time interval, such as a time interval of the order of several minutes (e.g. 3-10) for example, although other suitable time intervals can be used as will be appreciated. SSIDs are extracted out of each set of probe requests belonging to the same device, and stored as an anonymous list of SSIDs for that device in a database on the AP 201, or remotely on a connected device such as at a cloud-based storage location for example.

A personalised spatial or familiarity score of a PoI for a user is generated, according to an example, by performing a pairwise comparison of the captured/generated PNL from the user at an AP, referred to as the query probe, with all the previously stored PNLs. That is, with all historic PNLs at or for the AP (such as in the case that data representing PNLs is stored in a remote location for example). Each PNL corresponds to a vector $(v)$ of previously connected APs, and so the pairwise comparison captures whether an element of vector v is also observed in any other PNL (regardless of its position in the vector) as will be described in more detail below.

Therefore, according to an example, active broadcast probe requests sent by UE devices of users can be used in order to generate a familiarity score for locations at which one or more APs that are operable to receive the requests are provided. Datasets of the probe requests sent at a place of interest (PoI) or location are collected and maintained, and the similarity between the received probe request and the previously stored probe requests at the AP in question is calculated. If the PoI has been visited by the same user previously (recently), the similarity measurement would be the highest (i.e., 1) as the probe request is compared against its own instance. As time elapses between visits of the user to the same place, the PNL on his device would also change over time, causing the similarity score to decay over time. This decaying effect naturally incorporates the reputation fading as the longer a user has not visited a place, the more likely that she has lost her trust, confidence or interest in that place.

Furthermore this approach allows capture of whether a PoI has been visited by friends or acquaintances in the past. This is achieved based on the assumption that friends and family who have spent more time in common locations together are likely to share a common set of SSIDs, thus resulting in a higher similarity score than complete strangers.

A familiarity score for a location can be calculated based on people who are not part of user's social circle but yet who may be considered similar based on common daily routines. This group of people who are referred to as familiar strangers, are those who we share common trajectories and similar interests with (e.g., working at the same office, or going to the same gym), but with whom there may not necessary be an interaction. The approach allows for these groups of people to also be identified as they intrinsically share a set of common PNLs. Based on this 3-band categorization of self, friends, and familiar strangers, a Reputation Familiarity Score (RFS) can be calculated and communicated back to the user's device. This can then be used by the device's operating system or the end-user himself in order to limit or expand access to services at the location. For example, when arriving to a place with a high RFS, the device's operating system can tune itself to a more accessible mode allowing for others to share photos or share contact requests with the user.

However, not all the commonly seen APs need carry the same importance. Consider for example a common AP match with a generic SSID, indicating the provision of free and widely available WiFI for example. The fact that this network may have been seen by, for example, two users in the past tells very little about the homophily between the users because widely distributed hotspot APs do not uniquely identify a place. Therefore, in an example, a weighting factor can be calculated and applied to the elements of a PNL list. Private APs such as those at a user's home or office are more unique and hence have a higher/larger weight compared to public APs that are not unique and which may occur in multiple different locations and therefore be present in the PNL of a large number of users.

In an example, at least a component of a weighting factor can be determined using the term-frequency inverse document frequency (TF-IDF) of an SSID. That is, a weight, $w_u$, can be assigned to or otherwise associated with each AP based on its uniqueness. As well as accounting for the uniqueness of the APs, in an example the frequency of individuals visiting a given PoI can contribute at least a component to the weighting factor. However, this information is not stored on a mobile device or inside WiFi probes, as the PNL only specifies the previously connected APs regardless of how many times a device has been connected to that AP. Therefore, in an example, a recurrence weight can be determined by keeping a simple counter, representing the number of visits from a given MAC address to a given Pol (i.e., the number of times a device connected to a place's AP). This recurrence can be normalised per user and referred to as a normalised recurrence weight, $w_r$. TF-IDF is only one statistical way of giving weight to elements of the PNL list based on their global occurrence. Alternatively, any entropy based function or statistical model that captures the same concept (weight based on global occurrence) can be used.

According to an example, a weighting factor, w, is a combination of the uniqueness and normalised recurrence weight for each previously connected AP, such that

$$w = \gamma * w_u + \beta * w_r$$

where Y and $\beta$ are constants. A specific familiarity score or metric can then be calculated as an average weighted similarity score, $w_i$ if the $i^{th}$ member of the PNL is also observed in v' as follows:

$$f(v, v') = \frac{\sum_{i=1}^{n} w_i}{|v|}$$

where n denotes the number of common APs between v and v' and |v| corresponds to the number of all previously connected APs of the query device. This metric has two desirable properties. Firstly, it can capture whether others similar to the user visited the same place. We define these relations in terms of three categories of self, friends and familiar strangers and detect them based on setting a threshold for the similarity score. Secondly, this metric can capture an aging effect. That is if a user visited the same place in the distant past her similarity score would decay over time as her list of preferred connections (PNL) would have also changed over time thereby allowing the spatial score for those places that the user has stopped visiting to be discounted.

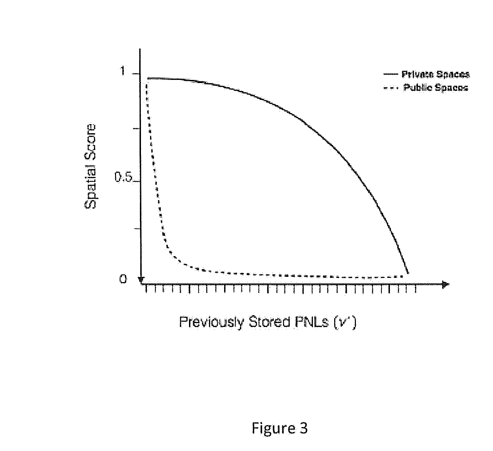

As the result of calculating this score across all v' that are seen at the same location, a distribution can be calculated for the user for the location. The distribution can be referred to as a spatial score distribution and, according to an example, can take two different shapes depending on the type of location. Figure 3 is a schematic representation of two spatial score distributions according to an example, for public versus private locations. For private spaces where individuals can inhabit a space by being part of a specific social circle, the distribution would resemble the integral of the standard normal distribution. However, for public spaces such as Pols common to urban cities a long tail distribution can be observed as it reflects that the place is visited by strangers.

However, depending on the similarity of the past visitors, this long-tail distribution may exhibit different properties. For example, the majority of the spatial scores (that is the top 80% for example) could have resulted from only 20% of the past visitors, resulting in a Pareto distribution, or coming from even a smaller percentage of the past visitors.

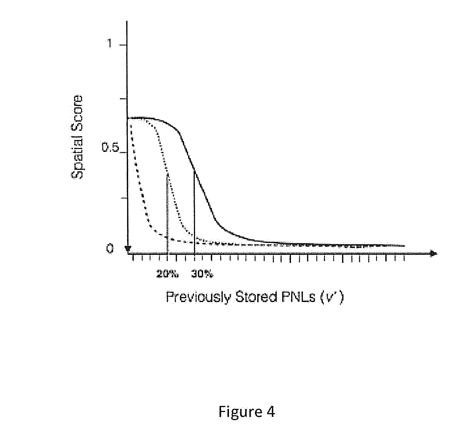

Figure 4 is a schematic representation of variations of the spatial score (long tail) distribution for three cases according to an example. The dotted line plot presents the Pareto principle of 80-20, and the dashed line plots presents the scenarios where the high spatial similarity score is only contributed by a few. The solid line on the other hand presents the cases where the top spatial score is contributed by 30% of the past visitors, thus indicating an increased likelihood of the users' homophily.

According to an example, these differences in the distributions can be captured using a shape parameter of the distribution, $\alpha$. The smaller the $\alpha$, the higher the percentage of past visitors found to be similar with the current user. As $\alpha$ grows bigger, the power law property of the distribution becomes more pronounced corresponding to the cases where very little similarity with all the past visitors exists. The final result for each user for a given place is the combination of the mean ($\mu$) of the distribution and the shape parameter, which can be communicated to UE in a semantically rich way (e.g., Frequently | Rarely | Never visited by your social circle, and so on) using beacon stuffing as described above for example.

In an example, the shape parameter can be determined through model fitting to a Pareto distribution, through the parameter alpha. For example, if X is a random variable with a Pareto (Type 1) distribution, then the probability that X is greater than some number x, i.e. the survival function (also called tail function), is given by

$$\overline{F}(x) = \Pr(X > x) = \begin{cases} \left(\frac{x_m}{x}\right)^{\alpha} & x \geq x_{m,} \\ 1 & x < x_m. \end{cases}$$

where $x_m$ is the (necessarily positive) minimum possible value of X, and $\alpha$ is a positive parameter. The Pareto Type 1 distribution is thus characterized by a scale parameter $x_m$ and a shape parameter $\alpha$, which is known as the tail index.

The cumulative distribution function of a Pareto random variable with parameters $\alpha$ and $X_m$ is:

$$F_X(x) = \begin{cases} 1 - \left(\frac{x_m}{x}\right)^{\alpha} & x \geq x_{m,} \\ 0 & x < x_m. \end{cases}$$

and the probability density function is:

$$f_X(x) = \begin{cases} \frac{\alpha x_m^{\alpha}}{x^{\alpha+1}} & x \geq x_{m,} \\ 0 & x < x_m. \end{cases}$$

Based on this equation and having distributions such as those in figure 4 where y=f(x), parameters $\alpha$ and $x_m$ can determined such that the resulting distribution best fits the observation (figure 4).

Parameter $\alpha$ can range between unity and infinity, however logically the greater the value of alpha, the more heavy-tailed the distribution would become. This property of the alpha (shape) parameter can thus be used by any application or the OS on the device. For example one example could be using alpha to filter the places that are not so "familiar" to the user (high alpha value) or rank recommended places based on the increasing alpha value, such that those that appear on top of the list are more trustworthy for the user.

Accordingly, a generated PNL for a device can be compared against stored historic PNLs at an AP at a location in order to determine a parameter relating to a distribution calculated using the comparisons. The parameter can represent a familiarity score for the user at the location that gives a measure of the familiarity of the location based on commonalities between SSIDs between the user in question and previous visitors to the location.

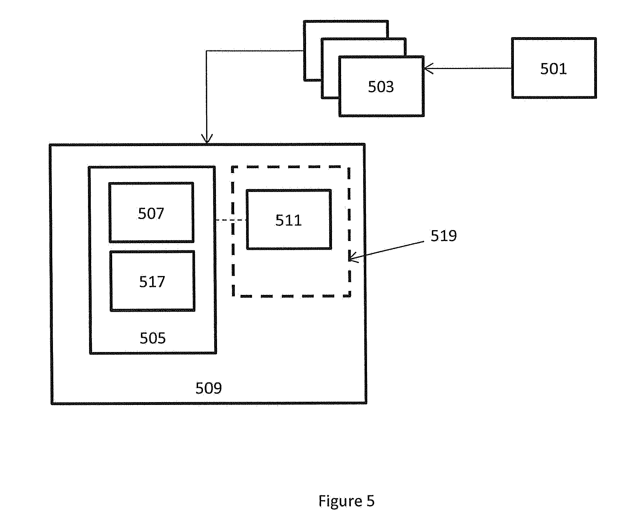

Figure 5 is a schematic representation of a system according to an example. UE device 501 transmits one or more probe requests 503, each of which includes an SSID of a network that the device 501 has previously connected to, to an AP 509. For a predefined period of time, the AP 509 can aggregate the SSIDs received via the requests 503 from device 501 (identified using its MAC address for example) in order to generate a PNL 507 that can be stored in a memory of the AP 505. As described above, the PNL 507 can be stored remotely either in addition to or in place of storage in memory 505 of AP 509.

The memory 505 can include multiple other (historic) PNLs 517 that have been generated in response to receipt of probe request from one or more other UE devices. Each PNL 507, 517 can be identified by a MAC address, or other suitable identifier of the device from which the requests originated.

The PNL 507 includes the MAC address, SSID and the last DHCP lease time of the networks that the user's device 501 has connected to in the past. Historic PNLs 517 can be input to a Probe Similarity Function 511 of the platform along with the current PNL 507. The Probe Similarity Function 511 measures the similarity of the queried PNL 507 to the others 517 by accounting for the importance of the entries of PNL 507 using a weighting factor as described above that is calculated using, for example, TF-IDF. That is, if a WiFi SSID is seen by everyone, it is considered less important than those SSIDs that are unique. As an example a generic Open WiFi SSID might be a common entity in many PNLs as seen everywhere across a city, and is thus not a good indication about a specific place. A specific unique SSID belonging to a user's home is less likely to occur in a PNL list of those users who do not have a social relation with the user however. In an example, in order to capture this concept, information retrieval methods such TF-IDF as noted above, which allows capture of the fact that some networks (SSIDs) are seen by everyone and thus they will serve less weight in a similarity measurement. This can be reflected in the weighting factor for each element of the PNL list as described above. For example, the constant for the weighting factor component for uniqueness can be set to unity, and the other constant can be set to zero.

For example, in a local case, the system can be implemented as a part of local infrastructure currently existing at locations, which could for example be a restaurant, zoo, beauty spot and so on. Local APs serving as the wireless network infrastructure located in the PoI capture WiFi probe requests of devices in range, each of which includes an SSID the user's device has previously connected to. The information is this then stored in a database, which may be remote from the AP.

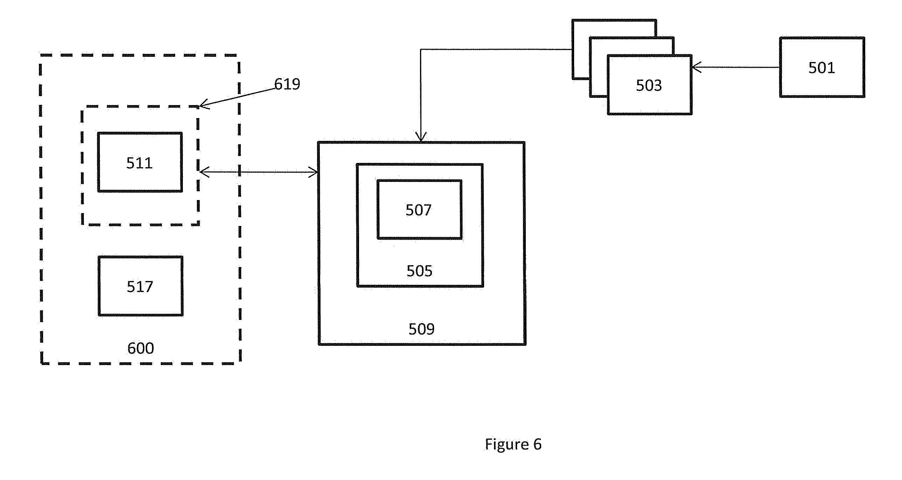

In a global case, probe information is not stored on the local infrastructure but rather can be uploaded to a cloud service for example. A cloud based Spatial Scoring Module 619 (as depicted in figure 6 for example) can be used to compute the RFS as before and communicate it to the device directly through an Internet link for example. In an example, the database of the collected probes is a global dataset including probes for all locations and resides in the cloud.

Upon receiving the probe, the AP performs the initial similarity look up before passing potentially matched records to the Spatial Scoring Module 519 (as depicted in figure 5) where the TFS score can be computed and communicated back to the AP, which can send the result back to the user's device. That is, the Spatial Scoring Module 519 can be provided as part of an AP, or can be provided as a remote or standalone module (619) that can receive data representing PNLs (including historic PNLs which can be queried from a database to which the module is linked or has access) to enable calculation of a familiarity score that can be transmitted to a user device via the AP that generated the PNL under consideration.

Figure 6 is a schematic representation of a system according to an example. The example of figure 6 illustrates the global case, in which a Spatial Scoring Module 619 is provided as part of a cloud based service 600 that has access to historic PNLs 517 and which can receive data representing PNL 507 from AP 509, calculate a RFS, and pass this back to AP 509.

Consider the following example, in which a use case application is demonstrated for a user next to or in the proximity of a location X receives a notification which includes the personalized trust (familiarity) score for the user based on his social relations and strangers with whom he has similar interests (concept of homophily). In this use case the user is referred to as u, and the PNL of the user which has been generated by an AP at the location is denoted as v. If the user, u, has 5 previously connected APs, (SSID1 ...5), the PNL for user will be:

| SSID | SSID1 | SSID2 | SSID3 | SSID4 | SSID5 |
| --- | --- | --- | --- | --- | --- |
| TFIDF | 1 | 1 | 0.5 | 0.1 | 0.1 |

We assume that the TFIDF scores for each element of this list is previously driven by looking at the global database of all the received PNLs. That is, as described above the TF-IDF for each SSID can be calculated by module 511 with reference to the historic stored PNLs at or for the AP in question (that received the probe requests from the user).

More particularly, the inverse document frequency (idf) is a measure of how much information a 'word' provides, that is, whether the term is common or rare across all 'documents'. In the present context, a word is an SSID, and the documents are the PNLs stored at or for an AP.

The idf is a logarithmically scaled fraction of the documents (D) that contain the word/term (t), obtained by dividing the total number of documents (N) by the number of documents containing the term (d), and then taking the logarithm of that quotient:

$$\mathrm{idf}(t, D) = \log \frac{N}{|\{d \in D : t \in d\}|}$$

Then tf-idf is calculated as:

$$\mathrm{tfidf}(t, d, D) = \mathrm{tf}(t, d) \times \mathrm{idf}(t, D)$$

where tf(t,d) is the raw frequency of an SSID in a PNL, i.e. the number of times that 'term' t occurs in 'document' d.

In the above example, SSID1 and SSID2, correspond to private property AP (home Wifi) and thus exhibit a high TFIDF score demonstrating their uniqueness. We assume SSID3 corresponds to a Sport Club for example, and is therefore of lower importance but still unique and common to only a specific set of people (club members). We assume that SSID4 and SSID5 are generic WiFi APs such as those seen in airports or those free WiFi APs placed by municipalities, and are therefore lower in TFIDF as they are common across many users globally.

We assume location X has 20 previously stored PNLs as shown below:

| $v'_1$ | $v'_2$ | $v'_3$ | $v'_4$ | $v'_5$ | $v'_6$ | $v'_7$ | .... | $v'_{20}$ |
|---|---|---|---|---|---|---|---|---|
| SSID1 | SSID1 | | | | | | | |
| SSID2 | SSID2 | | | | | | | |
| SSID3 | | | SSID3 | SSID3 | SSID3 | SSID3 | | |
| SSID4 | | SSID4 | | | | | | |
| | | SSID5 | | | | | | |

Here, v' denotes each PNL of or for the AP at the location X which generated the PNL shown above for the user, u. Note that PNL v'8 onwards do not have any of SSIDs 1-5.

Based on this specific example we can see that $v'_1$ and $v'_2$ hold a close social relation to u as they have SSID1 and SSID2 in common. Furthermore, we assume that for the application at hand $\beta = 0$ and $\gamma = 1$, thereby putting all the importance to the uniqueness ($w = \gamma*w_u + \beta*w_r$). This means that $w = w_u$.

Based on the above example, and using the above formula for $f(v,v')$, the results can be calculated as follows:

$f(v,v'_1) = (1+1+0.5+0.1)/5 = 0.52$
$f(v,v'_2) = (1+1)/5 = 0.4$
$f(v,v'_3) = (0.5)/5 = 0.1$
$f(v,v'_4) = (0.5)/5 = 0.1$
$f(v,v'_5) = (0.5)/5 = 0.1$
$f(v,v'_6) = (0.5)/5 = 0.1$
$f(v,v'_7) = (0.5)/5 = 0.1$
$f(v.v'_8) = 0/5 = 0$
$...f(v,v'_{20}) = 0$

The results of the comparison using the weighting factor can be plotted in order to provide a distribution whose shape parameter can be calculated in order to generate a familiarity score for the user, u.

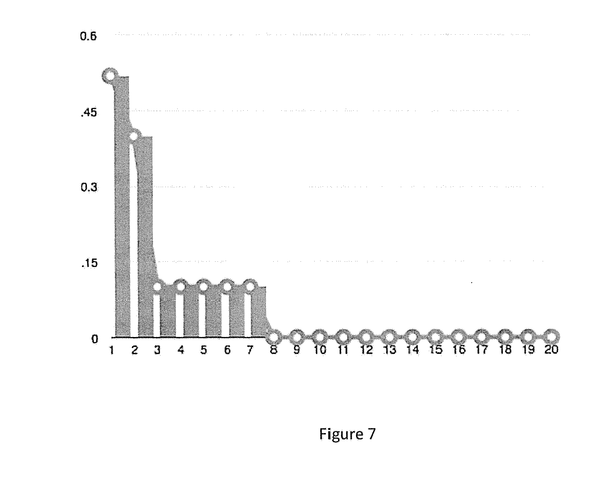

Figure 7 is a schematic representation of the pairwise scores according to this example. The distribution resembles a Pareto distribution for which the parameters are:

$$\text{shape (alpha):} \quad 0.75873825$$
$$\text{scale } (x_m): \quad 0.02237467$$

In this specific example, the shape parameter can be communicated back to the device through a probe response containing the value alpha=0.75 for example. The user's device extracts the score from this probe response from the AP, and can generate a local notification if the trust reputation Score is less than a predefined threshold value, such as 0.5 for example. In this case the user u gets notified that this is a recommended place for him as the score is greater than this predefined threshold value.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

**Claims**

1. A method for generating a reputation measure of a location using location visit patterns, comprising:

   receiving multiple probe request messages at a wireless access point at or in the vicinity of the location from respective ones of multiple user equipment devices;

   generating, for respective ones of the devices, a preferred network list, PNL, including one or more Service Set Identifiers, SSIDs, derived from probe requests received at the access point within a pre-defined period of time; and

   generating a familiarity metric for a device representing a measure of the similarity between the generated PNL of the device and multiple historic PNLs stored at or for the access point by comparing the generated PNL with the multiple historic PNLs.

2. A method as claimed in claim I, wherein a PNL for a device is generated by aggregating probe requests captured at the access point within the pre-defined time period based on a source Media Access Control, MAC, address.

3. A method as claimed in claim 1 or 2, further including:

   providing a weighting factor for respective ones of the SSID entries of the generated PNL representing a measure of the recurrence and/or uniqueness of the SSID of the generated PNL.

4. A method as claimed in claim 3, wherein a component of the weighting factor representing uniqueness is calculated using a term frequency-inverse document frequency of each SSID entry in the generated PNL over all SSID entries in the multiple historic PNLs stored at or for the access point.

5. A method as claimed in claim 3 or 4, wherein a component of the weighting factor representing recurrence is a measure of the number of times a device has connected to an access point that serves the network identified by an SSID.

6. A method as claimed in any preceding claim, further including:

   generating a spatial score distribution representing a variation in the familiarity metric of the generated PNL for the device compared to the multiple historic PNLs; and
   calculating a shape parameter of the distribution.

7. A method as claimed in claim 6, wherein the shape parameter represents a measure of the number of users who have connected to the access point at or in the vicinity of the location as well as other access points from the set of SSIDs of the generated PNL.

8. A method as claimed in claim 6 or 7, further including:

   transmitting the shape parameter to the device using a probe response message of the access point directed to the device.

9. A method as claimed in any of claims 6 to 8, wherein the value of the shape parameter is used by the device in order to recommend or execute services or access for the user at the location.

10. An access point at or in the vicinity of a location, the access point operable to:

    receive multiple probe request messages from respective ones of multiple user equipment devices in the vicinity of the location;
    generate, for respective ones of the devices, a preferred network list, PNL, including one or more Service Set Identifiers, SSIDs, using probe requests received within a pre-defined period of time; and
    generate a familiarity metric for a device representing a measure of the similarity between the generated PNL of the device and multiple historic PNLs stored at or for the access point by comparing the generated PNL with the multiple historic PNLs.

11. An access point as claimed in claim 10, wherein the access point is operable to generate a PNL for a device by aggregating captured or received probe requests captured according to a source Media Access Control, MAC, address.

12. An access point as claimed in claim 10 or 11, wherein the access point is operable to:

    generate a spatial score distribution representing a variation in the familiarity metric of the generated PNL for the device compared the multiple historic PNLs; and
    calculate a shape parameter of the distribution.

13. An access point as claimed in claim 12, wherein the access point is operable to transmit the shape parameter to the device using a probe response message directed to the device.

**14.** A user equipment device operable to receive a familiarity metric or shape parameter of a spatial score distribution from an access point, the device being operable to use the familiarity metric or shape parameter of the spatial score distribution to recommend or execute services or access for a user of the device at or in the vicinity of a location in which an access point that transmitted a probe response containing the familiarity metric or shape parameter of spatial score distribution is located.

**15.** A computer program product, comprising a computer usable medium having computer readable program code embodied therein, said computer readable program code adapted to be executed to implement a method for generating a reputation measure of a location using location visit patterns as claimed in any of claims 1 to 9.

| DA | SA | BSSID | SSID |
|---|---|---|---|
| ff:ff:ff:ff:ff:ff | 90:68:c3:be:34:9f | ff:ff:ff:ff:ff:ff | HILTON NY |

*105* *104* *107* *103* *100*

Figure 1

Figure 2

Figure 3

Figure 4

Figure 5

EP 3 076 355 A1

Figure 6

Figure 7

Europäisches
Patentamt

European
Patent Office

Office européen
des brevets

# EUROPEAN SEARCH REPORT

Application Number

EP 15 30 5485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Pejman Najafi ET AL: "Privacy Leaks from Wi-Fi Probing 1",<br><br>1 March 2014 (2014-03-01), XP055213015,<br>Retrieved from the Internet:<br>URL:https://web.archive.org/web/2015020300 0508/http://andreasgeo.com/wp-content/uplo ads/2014/06/Privacy-Leaks-from-Wi-Fi-Probi ng.pdf<br>[retrieved on 2015-09-14]<br>* the whole document * | 1-15 | INV.<br>G06Q30/02 |
| X | Anonymous: "Show me your SSID's, I'll Tell Who You Are! ¦ /dev/random",<br><br>3 April 2012 (2012-04-03), XP055212820,<br>Retrieved from the Internet:<br>URL:https://web.archive.org/web/2012040315 1529/http://blog.rootshell.be/2012/01/12/s how-me-your-ssids-ill-tell-who-you-are/<br>[retrieved on 2015-09-11]<br>* the whole document * | 1-15 | |
| X | RANVEER CHANDRA ET AL: "Beacon-Stuffing: Wi-Fi without Associations",<br>MOBILE COMPUTING SYSTEMS AND APPLICATIONS, 2007. HOTMOBILE 2007. EIGHTH IEEE WORKSHOP ON, IEEE, PISCATAWAY, NJ, USA,<br>1 March 2007 (2007-03-01), pages 53-57, XP031165179,<br>ISBN: 978-0-7695-3001-7<br>* the whole document * | 14 | TECHNICAL FIELDS SEARCHED (IPC)<br><br>G06Q |

The present search report has been drawn up for all claims

| Place of search | Date of completion of the search | Examiner |
|---|---|---|
| The Hague | 15 September 2015 | Arbutina, Ljiljana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)